# EUROPEAN PATENT APPLICATION

(11) **EP 1 600 929 A2**
(43) Date of publication of application: **30.11.2005**
(21) Application number: 05011358.8
(22) Date of filing: 25.05.2005
(51) Int. Cl.: G09G 3/36

(54) **Color liquid crystal display device**

(30) Priority: 27.05.2004 JP 2004157890; 26.07.2004 JP 2004217362
(71) Applicant: ALPS ELECTRIC CO., LTD., Tokyo 145-8501 (JP)
(72) Inventor: Yasuoka, Yozo, Ota-ku Tokyo 145-8501 (JP); Kano, Mitsuru, Ota-ku Tokyo 145-8501 (JP)
(74) Representative: Klunker . Schmitt-Nilson . Hirsch

(57) **Abstract**

The color liquid crystal display device includes a transflective liquid crystal display panel (1), a frontlight (2) arranged on a surface of the liquid crystal display panel, the frontlight (2) including a front-side light source (73) for emitting light having three primary colors, a backlight (3) arranged on a back side of the liquid crystal display panel (1), the backlight (3) including a back-side light source (53) for emitting light having three primary colors, a controller for controlling the front-side light source (73) and the back-side light source such that light emitted from the front-side light source and the back-side light source is irradiated onto the liquid crystal display panel (1) as alternating light, and a control circuit for controlling display of the liquid crystal display panel in synchronization with the alternating light.

## Description

### BACKGROUND OF THE INVENTION

### 1. Field of the Invention

The present invention relates to a color liquid crystal display device, which is capable of displaying bright color and allowing both of reflection and transmission displays without using color filters.

### 2. Description of the Related Art

Liquid crystal display technologies have been developed with bipolarization divided between a large-sized liquid crystal display device allowing large screen display such as a television picture and a small-sized liquid crystal device applied to a mobile phone, a personal digital assistant (PDA) and the like.

The large-sized liquid crystal display device requires the wide viewing angle, high contrast and high color reproductivity, as well as high-speed response at the time of reproducing moving pictures. On the other hand, in the small-sized liquid crystal display device employed for the mobile phone and the like, a thin film transistor (TFT) type liquid crystal display (LCD) device, which has been developed from a simple monochrome display panel, through a transflective color super twisted nematic (STN) panel, to a TN liquid crystal panel, has been mainly used. Such a small-sized liquid crystal display device also requires the high brightness, high resolution, high-speed response, and high color reproductivity. However, the current TN-TFT-type LCD has technical difficulty in achieving the high brightness and high-speed response.

For example, one of reasons for the difficulty in achieving the high brightness is that color filters requisite for color display in the TN-TFT-LCD wastefully absorb most of light emitted from a light source provided in the liquid crystal display device.

Moreover, for the color display for each pixel in the TN-TFT-LCD, it is required to arrange a color filter on each of three sub pixels into which a pixel is divided and to use three sub pixels separately for display of one pixel, and, for the color display with high resolution, it is required to arrange sub pixels to be driven with high precision and to arrange a display driving transistor for each sub pixel. This leads to miniaturization of a circuit for controlling the liquid crystal display and to increase in the number of wiring lines for driving minute thin film transistors.

Many attempts to overcome such defects have been made. As one example of proposed techniques, a transmissive liquid crystal display device employing a field sequential method has been known in the related art.

The field sequential method is a technique in which red, green and blue color sub pixels are sequentially lightened, and corresponding to the color sub pixels, a monochrome picture display is performed in a TN-type liquid crystal display panel. In this method, in order to prevent generation of flickers due to color switching, three colors are switched at an interval of about 1/60s, which is one frame time (screen display time of a set of three colors), i.e., about 1/180s per one color, i.e., about 6 ms. In addition, for example, when 2/3 of 6 ms is assigned for switching of a picture of each color, i.e., electrical write of the screen and response of liquid crystal and 1/3 of 6 ms is assigned for lightening a backlight, if 1 ms is assigned for the electrical write of the screen, the response time of the liquid crystal is required to fall within about 3 ms.

According to the above-mentioned field sequential method, since only light having a desired color passes through the liquid crystal panel which displays the monochrome picture, color display is possible without micro color filters. Accordingly, the color display by the liquid crystal display panel having a simple structure is realized, and, since the color filters may not be used, the light emitted from the light source can be effectively used, thereby facilitating display with the high brightness (See Japanese Unexamined Patent Application Publication No. 11-14988).

In addition, in the Japanese Unexamined Patent Application Publication No. 11-14988, since three red, blue and green cold cathode fluorescent tubes are used to perform the color display by the field sequential method, power consumption is great and thus there is a need of a heavy cell having high capacity. Therefore, it is difficult to implement a thin and lightweight display device. Under such circumferences, there has been proposed a technique in which the field sequential method is applied to a reflective liquid crystal display device which is capable of reducing power consumption of the cell by using light from the outside for display (See Japanese Unexamined Patent Application Publication No. 2000-162575).

In the liquid crystal display device employing the sequential method disclosed in the Japanese Unexamined Patent Application Publication No. 2000-162575, the field sequential method is applied to a reflective liquid crystal display device. However, in the above-mentioned liquid crystal display device, a single light source is provided at an indoor location distant from a liquid crystal panel, and color display is performed using a mixed color made by time-division by sequentially emitting red, green and blue light emitted from the light source toward the liquid crystal panel for monochrome display and by driving the display of the liquid crystal display panel in synchronization with switching of these colors. Accordingly, there is a problem in that the size of the device is large and the device cannot be applied to small-sized and lightweight apparatuses. In addition, the above-mentioned display device has another problem in that the light emitted in the time-division is also irradiated onto objects outside the liquid crystal display panel.

In addition, since the size and the precision of the color liquid crystal display panel become large and high, respectively, the number of pixels tends to increase, and accordingly, the number of wiring lines required to drive pixels tends to increase. However, when the number of gate and source wiring lines for pixel driving increases, it becomes difficult to form the wiring lines on a substrate. Even if possible, since the width of the wiring lines become narrow, resistance of the wiring lines increases, and accordingly, it becomes difficult to transmit driving signals at a high-speed.

For example, in a structure in which color display is performed with high resolution and liquid crystals are driven by thin film transistors for each pixel, it is required to connect a plurality of gate wiring lines to a shift register having multiple stages and to perform a switching operation between the multiple stages. However, since it is required to arrange a separate wiring line (for example, a ground line) for supplying an initial state for each of the stages constituting the shift register, there arises a problem in which the area required for wiring lines surrounding the shift register increases.

### SUMMARY OF THE INVENTION

The present invention has been conceived in view of the above circumferences, and it is an object of the invention to provide a color liquid crystal display device enabling reflective field sequential display in a bright place and enabling transmissive or reflective field sequential display in a dark place.

It is another object of the invention to provide a color liquid crystal display device employing a field sequential display method without requiring color filters, which is capable of decreasing the number of source wiring lines for pixel driving and decreasing the number of wiring lines surrounding a gate driver and hence reducing the area required for the wiring lines by driving gate wiring lines integrally using a special register.

It is still another object of the invention to provide a color liquid crystal display device, which is capable of providing display having high brightness by effectively using light emitted from a light source without leaking out to the outside and by performing field sequential display with no color filter.

In order to the above objects, according to the invention, a color liquid crystal display device includes: a transflective liquid crystal display panel; a frontlight arranged on a surface of the liquid crystal display panel to emit light from the surface of the liquid crystal display panel, the frontlight including a front-side light source for emitting light having three primary colors; a backlight arranged on a back side of the liquid crystal display panel to emit light from the back side of the liquid crystal display panel, the backlight including a back-side light source for emitting light having three primary colors; a controller for controlling the front-side light source and the back-side light source such that light emitted from the front-side light source and the back-side light source is irradiated onto the liquid crystal display panel as alternating light; and a control circuit for controlling display of the liquid crystal display panel in synchronization with the alternating light.

Further, according to the invention, preferably, a plurality of pixel electrodes is provided in the liquid crystal display panel, and the plurality of pixel electrodes is controlled by a plurality of switching elements driven by a plurality of gate lines and a plurality of source lines. In addition, preferably, the plurality of gate lines is connected to a gate driver, the gate driver is provided with a shift register having multiple-stage output terminals, the shift register having m stages (m is an integer of one or more) each of which memorizes one of two states and includes clock input terminals for inputting clock signals having n different phases (n is an integer of two or more), input terminals for inputting signals sent from an input terminal of the shift register or an output terminal of a previous stage, and output terminals for outputting signals to be sent to an input terminal of the next stage or an output terminal of the shift register, and a signal of an initial state level for initializing state of each of the stages is input from one of the clock input terminals to each of the stages.

Furthermore, according to the invention, preferably, either reflective liquid crystal display mode or transmissive liquid crystal display mode is selectable, the reflective liquid crystal display mode being performed by the alternating light emitted from the front-side light source and the display control of the liquid crystal display panel and the transmissive liquid crystal display mode being performed by the alternating light emitted from the back-side light source and the display control of the liquid crystal display panel.

Moreover, according to the invention, preferably, at least one of the frontlight and the backlight includes a light emitter composed of red, green and blue of three primary color light emitting diodes, an optical waveguide which is arranged along the liquid crystal display panel and on which light emitted from the light emitter is incident, and an optical guiding means provided in the optical waveguide to guide the light emitted from the light emitter to the liquid crystal display panel.

In addition, according to the invention, preferably, each pixel of the transflective liquid crystal display panel is divided into a transmission region for transmitting the light emitted from the backlight and a reflection region for reflecting the light emitted from the frontlight.

Further, according to the invention, preferably, stages of the shift register are divided into a plurality of groups, and the clock input terminals provided in stages of each group are connected among clock input terminals having the same phase.

Furthermore, according to the invention, preferably, each of the stages includes a memory means for memorizing one of the two states and an initializing means for initializing a state memorized by the memory means to an initial state level of a signal input from one of the clock input terminals.

Moreover, according to the invention, preferably, the initializing means is constituted by MIS transistors, and MIS transistors, including the MIS transistors constituting the initializing means, included in each of the stages are of the same type.

### BRIEF DESCRIPTION OF THE DRAWINGS

Fig. 1 is a perspective view of the entire configuration of a liquid crystal display device according to the invention;
Fig. 2 is an expanded sectional view of the liquid crystal display device of Fig. 1;
Fig. 3 is an expanded sectional view of a liquid crystal display panel of the liquid crystal display device;
Fig. 4 is a partially expanded view of thin film transistors and transparent electrodes of the liquid crystal display panel;

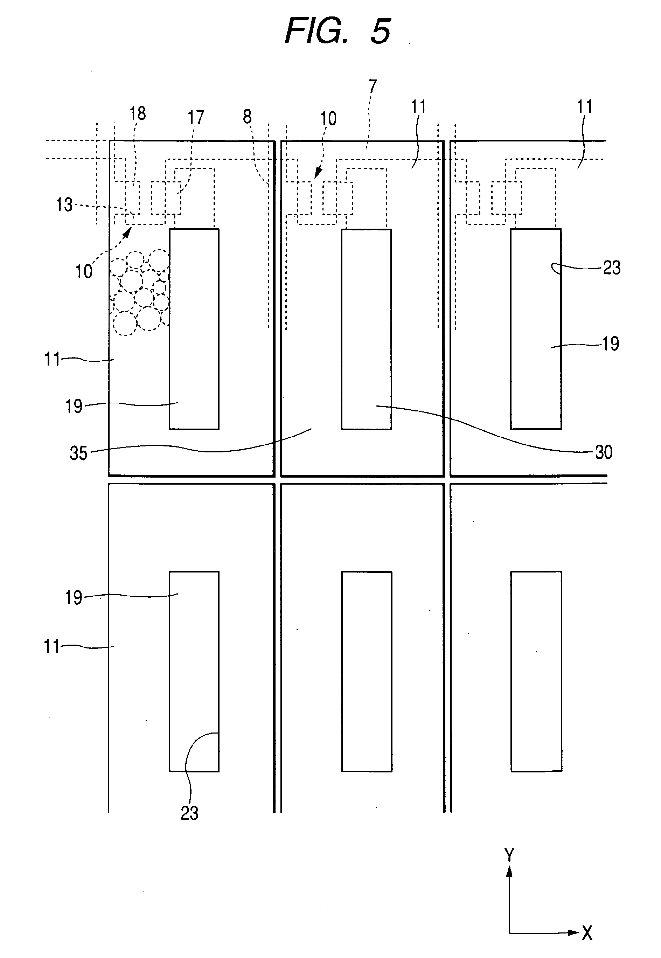

Fig. 5 is a partially expanded view of pixel electrodes of the liquid crystal display panel;
Fig. 6 is an explanatory diagram illustrating a form of display of a general color liquid crystal display panel employing color filters;
Fig. 7 is an explanatory diagram illustrating a form of sequential field display using the liquid crystal display panel;
Fig. 8 is a timing chart illustrating a form of drive of the sequential field display;
Fig. 9 is a schematic diagram illustrating the liquid crystal display panel, and a gate driver, clock circuit and source driver, which are connected to the liquid crystal display panel;
Fig. 10 is a diagram illustrating a configuration of the gate driver connected to the liquid crystal display panel;
Fig. 11 is a diagram illustrating a circuit configuration of MIS transistors provided at each stage of the gate driver;
Fig. 12 is a timing chart when the MIS transistors are driven; and
Fig. 13 is an expanded sectional view of a liquid crystal display panel according to a second embodiment of the present invention.

### DESCRIPTION OF THE PREFERRED EMBODIMENT

The preferred embodiments of the invention will now be described with reference to the drawings.

### First Embodiment

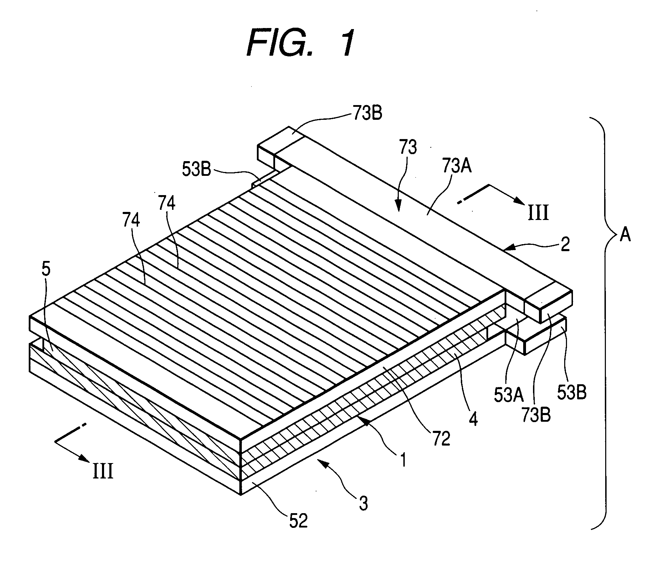

Fig. 1 is a perspective view of the entire configuration of a liquid crystal display device according to a first embodiment of the invention. A liquid crystal display device A includes a transflective liquid crystal display panel 1, a frontlight 2 disposed at a front side of the liquid crystal display panel 1 to emit light from a surface of the liquid crystal display panel 1, and a backlight 3 disposed at a back side of the liquid crystal display panel 1 to emit light from the back side of the liquid crystal display panel 1. Hereinafter, structures of the liquid crystal display panel 1, the backlight 3, and the frontlight 2 and a structure for driving these elements and for displaying images will be described.

### Liquid Crystal Display Panel

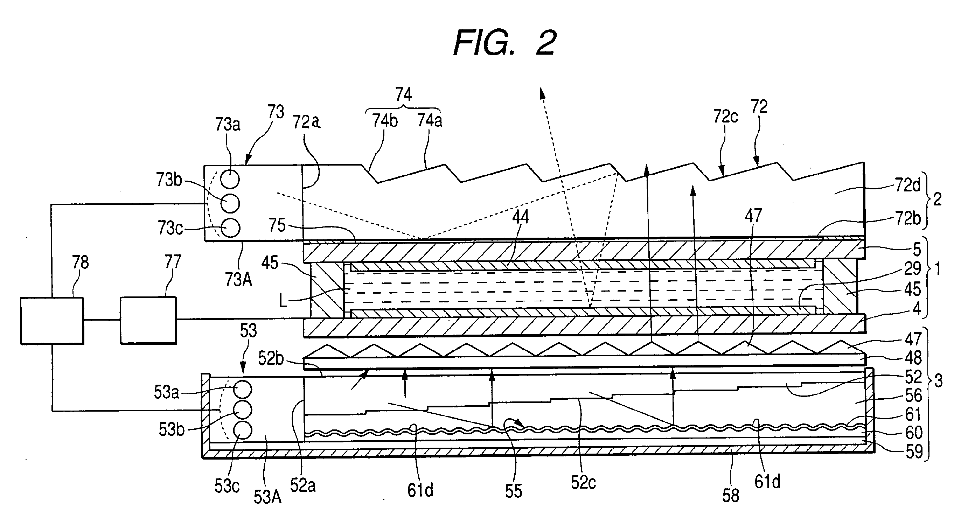

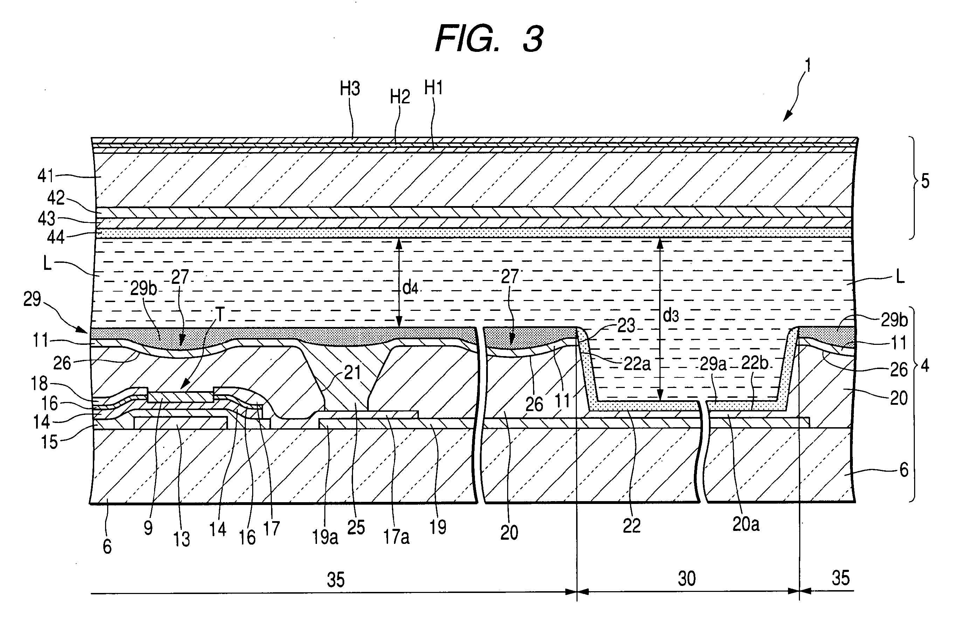

As shown in Figs. 2 and 3, the liquid crystal display panel 1 includes an active matrix substrate (one substrate) 4 on which switching elements are formed, a counter substrate (the other substrate) 5 opposite to the active matrix substrate 4, and a liquid crystal layer L serving as a light modulation layer interposed between the substrates 4 and 5.

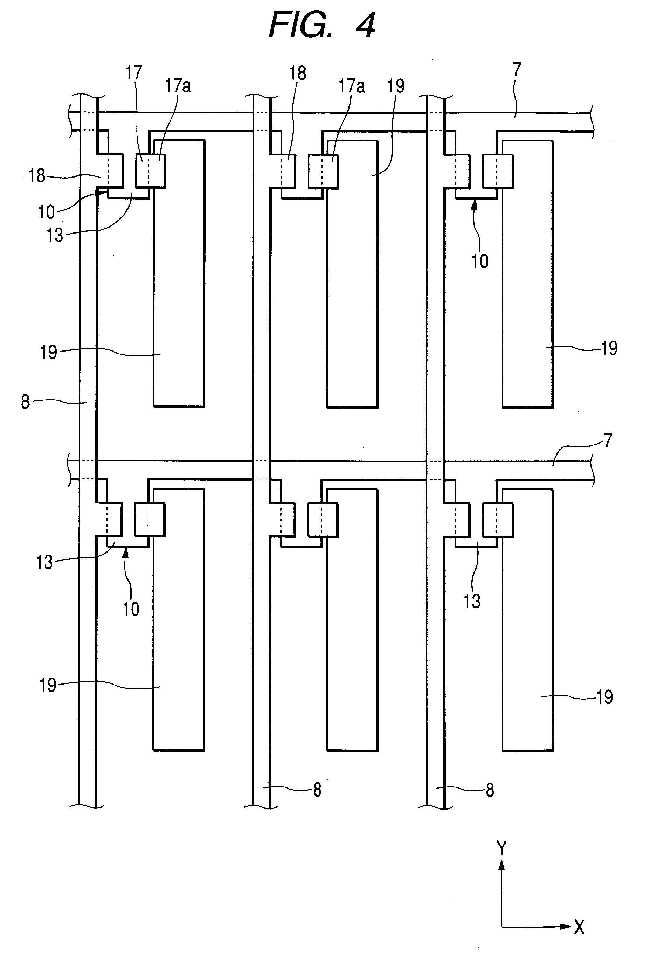

As shown in Fig. 3, the active matrix substrate 4 has a plurality of scanning lines 7 and a plurality of signal lines 8 formed on a transparent substrate body 6 made of glass, plastic, or the like in a row direction (X direction in Fig. 4) and a column direction (Y direction in Fig. 4), respectively, which are electrically isolated from one another, and TFTs (switching elements) 10 formed in the vicinity of intersections of the scanning lines 7 and the signal lines 8.

On the substrate body 6, a region in which the pixel electrodes are formed, a region in which the TFTs 10 are formed, and a region in which the scanning lines 7 and the signal lines 8 are formed are called a pixel region, an element region, and a wiring line region, respectively.

Each of the TFTs 10 in this embodiment has an inverted staggered type structure. On the substrate body 6, a gate electrode 13, a gate insulating layer 15, an i-type semiconductor layer 14, a source electrode 17 and a drain electrode 18 are formed in order. On the i-type semiconductor layer 14, an etching stopper layer 9 is formed between the source electrode 17 and the drain electrode 18.

Specifically, a portion of the scanning line 7 projects to form the gate electrode 13, an island-shaped semiconductor layer 14 is formed on the gate insulating layer 15 covering the gate electrode 13 in such a manner that the semiconductor layer 14 overlaps the gate electrode 13 in plan view, the source electrode 17 is formed at one of both ends of the i-semiconductor layer 14 via a n-type semiconductor layer 16 for ohmic contact, and the drain electrode 18 is formed at the other of both ends of the i-semiconductor layer 14 via the n-type semiconductor layer 16 for ohmic contact.

In addition, at a middle portion of a rectangular region defined by the scanning line 7 and the signal line 8, a transparent electrode 19 made of a transparent material such as ITO is formed directly on the substrate body 6. Accordingly, the transparent electrode 19 is formed on the same plane as the gate electrode 13. The transparent electrode 19 has one end 19a connected to a connecting portion 17a of one end of the source electrode 17 mounted on the one end 19a and is formed in a strip shape in plan view. As shown in Fig. 3, the vertical width of the transparent electrode 19 is slightly shorter than that of the rectangular region surrounded by the scanning line 7 and the signal line 8 and the horizontal width of the transparent electrode 19 is a fraction of the horizontal width of the rectangular region.

The substrate body 6 is made of an insulative transparent material such as glass or plastic. The gate electrode 13 is made of a conductive metal material and is integrated with the scanning line 7 arranged in the row direction as shown in Fig. 4. The gate insulating layer 15 is made of a silicon-based insulative material such as a silicon oxide (SiOx) or a silicon nitride (SiNx) and is formed on the substrate in such a manner that the layer 15 covers the scanning line 7 and the gate electrode 13 and does not cover the transparent electrode 15. In addition, a position at which the gate insulating layer 15 is formed is a position except at least a connection portion of the transparent electrode 19 and the source electrode 17.

The semiconductor layer 14 is made of amorphous silicon (a-Si) or the like. Of the semiconductor layer 14, a region opposite to the gate electrode 13 via the gate insulating layer 15 is defined as a channel region. The source electrode 17 and the drain electrode 18 are made of a conductive material and are formed opposite to each other with the channel region interposed therebetween on the semiconductor layer 14. In addition, the drain electrode 18 extends from the signal line 8 arranged in the column direction.

In addition, the above-described structure of the thin film transistor T may be replaced by other forms or structures, for example, a staggered-type or polysilicon-type TFT, known as switching elements which may be applied to the liquid crystal display.

In addition, an insulating layer 20 made of an organic material is laminated on the substrate body 6, and an optical diffuse reflective pixel electrode (light reflective pixel electrode) 11 having and made of a high reflectivity metal material such as A1 or Ag is formed on the insulating layer 20.

The pixel electrode 11 is formed on the insulating layer in such a manner that the pixel electrode 11 has a rectangular shape in plan view, which is slightly smaller than the rectangular region surrounded by the scanning line 7 and the signal line 8. In addition, as shown in Fig. 4, the pixel electrodes 11 are arranged in a matrix with a gap therebetween in such a manner that the pixel electrodes 11 arranged in all directions in plan view are not short-circuited. That is, these pixel electrodes 11 are arranged in such a manner that their edges go along the scanning line 7 and the signal line 8 positioned under the pixel electrodes 11 and are formed in such a manner that most of regions partitioned by the scanning line 7 and the signal line 8 are defined as the pixel region. This pixel region corresponds to a display region in the liquid crystal display panel 1.

The insulating layer 20 is made of an organic insulative material such as an acryl resin, a polyimide resin, a benzocyclobuten polymer (BCB), or the like and serves to reinforce the protection of the TFT 10. The insulating layer 20 is relatively thick laminated on the substrate body 6 to ensure electrical isolation between the pixel electrodes 11, the TFTs 10, and various wiring lines, and prevent large parasitic capacitance from being generated between the substrate body 6 and the pixel electrodes 11. In addition, an uneven structure formed on the substrate body 6 by the TFTs 10 and the various wiring lines can be planarized by the thick insulating layer 20.

Next, the insulating layer 20 has a contact hole 21 formed to reach the one end 17a of the source electrode 17, a concave portion 22 formed on the transparent electrode 18, and a plane-shaped through hole 23 formed to fit an inlet 22a of the concave portion 22 in a portion of the pixel electrode 11 corresponding to a position of the concave portion 22. The concave portion 22 is formed in such a manner that the insulating layer 20 is mostly removed in a depth direction, leaving only a portion serving as a coat layer 20a in the bottom 22b. Also, a planar shape of the concave portion 22 is formed into a strip shape slightly shorter than the transparent electrode 19 to correspond to a planar shape of the transparent electrode 19.

For the pixel region, a region in which the concave portion is formed is a transmission region 30 through which incident light from the substrate 4 (light emitted from the backlight 3) is transmitted, and a non-hole portion (a portion in which the hole 23 is not formed) of the pixel electrode 11 is a reflection region 35 from which incident light from the substrate 5 is reflected.

In addition, one pixel electrode 11 corresponds to approximately one pixel region and the area of the through hole 23 corresponds to a region in which light passes in transmission display.

A conductive portion 25 made of a conductive material is formed in the contact hole 21. The pixel electrode 11 is electrically connected to the source electrode 17, which is disposed under the insulating layer 20, via the conductive portion 25. Accordingly, the source electrode 17 is electrically connected to both of the pixel electrode 11 and the transparent electrode 19.

On the other hand, a plurality of concave portions 26 formed by pressing a transfer pattern against a surface of the insulating layer 20 at a position corresponding to the pixel region is formed on the surface of the insulating layer 20. The plurality of concave portions 26 formed on the surface of the insulating layer 20 grants a surface-concaved shape to the pixel electrode 11. Light incident on the liquid crystal display panel is partially scattered by a plurality of concave portions 27 formed in the pixel electrode 11, allowing a diffuse reflection function to obtain brighter display in a wider viewing range.

On the substrate body 6 as configured above is formed a lower substrate side alignment film, which is made of polyimide or the like and is subject to an alignment treatment such as a rubbing treatment or the like, to cover the pixel electrode 11, the insulating layer 20, the concave portion 22 and the concave portion 27. For the lower substrate side alignment film, an alignment treatment for a portion formed on the transmission region 30 is different from that for a portion formed on the reflection region 35. The lower substrate side alignment film includes a transmission region alignment film 29a formed on a liquid crystal layer of the transmission region 30 and a reflection region alignment film 29b formed on a liquid crystal layer of the reflection region 35.

On the other hand, the counter substrate 5 serves as a common electrode substrate, a black matrix layer 42 is formed on a surface of the transmissive substrate body 41, made of glass, plastic, or the like, facing the liquid crystal layer Light source unit 1, and a lattice-shaped light shielding layer portion of the black matrix layer 42 is provided at a position at which a boundary between the pixel electrodes 11 is partitioned. In addition, a counter electrode (common electrode) 43 made of ITO or the like and an upper substrate side alignment film 44 are formed on a surface of the black matrix layer 42 facing a liquid crystal layer. In addition, the black matrix layer 42 may be formed to surround four sides of the pixel in plan view, or alternatively, may be formed in only two of the four sides to secure brightness of display in a reflection mode.

Moreover, the substrates 5 and 6 as configured above are separated from each other with a predetermined gap by a spacer (not shown) and are integrally bonded to each other by a thermosetting sealing agent 45 coated in a square frame shape on the circumferences of the substrates, as shown in Fig. 2. Then, liquid crystal is sealed in a space closed by the substrates 5 and 6 and the sealing agent 45, thereby forming the liquid crystal layer L serving as the light modulation layer to complete the liquid crystal panel 1.

In Fig. 2, for the purpose of simplification, various layers at a liquid crystal side of the substrate 5 and various layers at a liquid crystal side of the wiring lines and the substrate 6 are omitted, and only a positional relationship between the alignment films 29 and 44 is shown.

In addition, a polarizing plate H1 and phase difference plates H2 and H3 are provided in an outer side of the substrate body 41, if necessary, as shown in Fig. 3, however, the polarizing plate H1 and the phase difference plates H2 and H3 may be omitted as shown in Fig. 2.

In the transflective liquid crystal display panel 1 according to this embodiment, as described above, since the concave portion 22 is formed on the insulating layer 20 and the liquid crystal is introduced into the concave portion 22, the thickness d₃ of the liquid crystal layer L on the transmission region 30 (liquid crystal layer of the transmission display region) is, for example, twice the thickness d₄ of the liquid crystal layer L on the reflection region 35 (liquid crystal layer of the reflection display region). Since the thickness d₃ of the liquid crystal layer L on the transmission region 30 is different from the thickness d₄ of the liquid crystal layer L on the reflection region 35, an optical condition in which the liquid crystal layer functions as an effective shutter is optimized. In addition, the transmission region alignment film 29a formed on the transmission region 30 and the reflection region alignment film 29b formed on the reflection region 35 have their pre-tilt angles changed depending on a liquid crystal display mode and the thickness of the liquid crystal layer L.

The liquid crystal constituting the liquid crystal layer L employed in the present invention is preferably liquid crystal having an OCB (optically compensated birefringence) mode in respect of high-speed switching. Since the liquid crystal having the OCB mode is well known as liquid crystal, which is able to switch at a high speed by switching between a spray alignment state and a bent alignment state, it is desirable as liquid crystal applied when the field sequential method of this embodiment is employed.

### Backlight

Next, as shown in Fig. 2, the backlight 3 of this embodiment is arranged at the back side of the liquid crystal display panel 1 and is generally composed of a transparent optical waveguide 52 made of a flat transparent acryl resin or the like, a light source 53, a diffusive reflector 55, and a support member 58. In the backlight 3, the light source 53 is arranged near an edge 52a through which light is introduced into the optical waveguide 52 and the diffusive reflector 55 is arranged at a surface (bottom, one surface) opposite to an emission surface (top, the other surface) 52b of the optical waveguide 52 via an air layer 56.

The optical waveguide 52 is arranged at the back side of the liquid crystal display panel 1 and directs light, which is emitted from the light source 52, to the liquid crystal display panel 1. As shown in Fig. 2, the light emitted from the light source 53 is introduced into the optical waveguide 52 through the edge 52a and then is emitted from the emission surface 52b of the optical waveguide 52 to the liquid crystal display panel 1.

In addition, steps are formed on a reflective surface (optical guiding means) 52c opposite to the emission surface 52b of the optical waveguide 52 in such a manner that the thickness of the optical waveguide 52 is gradually reduced as it goes away from the light source 53, that is, a side distant from the light source 53 is thinner than a side close to the light source 53.

The light source 53 includes a bar-shaped optical guider 53A attached to the edge 52a of the optical waveguide 52 and light emitting elements 53B attached to both ends of the bar-shaped optical guider 53A. The bar-shaped optical guider 53A propagates the light emitted from the light emitting elements 53B to emit toward the edge 52a of the optical waveguide 52. In addition, within the light emitting element 53B are provided a red light emitting diode (LED) 53a, a green light emitting diode (LED) 53b, and a blue light emitting diode (LED) 53c. Light having a desired color emitted from these light emitting diodes is guided to the optical waveguide 52 through the bar-shaped optical guider 53A.

The diffusive reflector 55 has the same diffuse reflection structure as, for example, the insulating layer 20 employed in the liquid crystal display panel 1, and the plurality of concave portions 27 and the pixel electrode 11 formed on the insulating layer 20.

Specifically, an organic film 60 is formed on a substrate 59, a plurality of minute concave portions is formed on a surface of the organic film 60, and a metal reflective film 61 made of Al, Ag, or the like having light reflectivity is formed on the plurality of minute concave portions. Accordingly, a plurality of minute concave portions 61d is formed on a surface of the metal reflective film 61.

According to the backlight 3 as constructed above, the light emitted from the light source 53 is guided to the liquid crystal display panel 1 by the optical waveguide 52, that is, irradiates the liquid crystal display panel 1 from the back side of the liquid crystal display panel 1. At the same time, light leaked from a rear side of the optical waveguide 52 in a propagation direction of the light is efficiently reflected by the reflective film 61 toward the optical waveguide 52 and then is guided to the liquid crystal display panel 1 through the optical waveguide 52. Accordingly, a brighter backlight 3 can be achieved.

In addition, as shown in Fig. 2, it is preferable to dispose a prism sheet 48 having a plurality of condensing prisms 47 between the backlight 3 and the liquid crystal display panel 1 for the purpose of increasing condensation efficiency and obtaining brighter transmission display.

### Frontlight

Next, the frontlight 2 of this embodiment is composed of a transparent optical waveguide 72 and a light source 73. The light source 73 is arranged near an edge 72a through which light is introduced into the optical waveguide 71. The optical waveguide 72 is made of a transparent resin. An emission surface 72b through which light irradiating the liquid crystal display panel 1 is emitted is formed in the bottom of a body 72d of the optical waveguide 72, and a reflection surface (optical guiding means) 72c by which a propagation direction of light in the body 72d is changed is formed in one surface (top surface of the optical waveguide 72) opposite to the emission surface 72b. An adhesive layer composed of plural layers is arranged in an elongated manner between the emission surface 72b and a display surface (specifically, between both ends in a width direction of the body 72d). The optical waveguide 72 and the liquid crystal display panel 1 are bonded to each other by the adhesive layer and are integrated via an air layer 75.

On the reflection surface 72c are formed wedge-shaped grooves 74, which change the propagation direction of light by reflecting the light propagating in the body 72d, in a stripe shape by a specific pitch. These grooves 74 consist of gentle slopes 74a formed obliquely with respect to the emission surface 72b and rapid slopes 74b successive to the gentle slopes and formed at a tilt angle rapider than that of the gentle slopes 74a. The grooves 74 are aligned in a direction in parallel to the edge 72a of the optical waveguide 72.

The light source 73 includes a bar-shaped optical guider 73A attached to the edge 72a of the optical waveguide 72 and light emitting elements 73B attached to both ends of the bar-shaped optical guider 73A. The bar-shaped optical guider 73A propagates the light emitted from the light emitting elements 73B to emit toward the edge 72a of the optical waveguide 72. In addition, within the light emitting element 73B are provided a red light emitting diode (LED) 73a, a green light emitting diode (LED) 73b, and a blue light emitting diode (LED) 73c. Light having a desired color emitted from these light emitting diodes is guided to the optical waveguide 72 through the bar-shaped optical guider 73A.

### Structure of Driving Display Unit

A driving IC (not shown) connected to the plurality of scanning lines 7 or the plurality of signal lines 8 formed in the substrate body 6 is provided at an end portion of the substrate body 6 at a side of a TFT array substrate of the liquid crystal display panel 1. In addition, a control circuit 77 for controlling display of the liquid crystal display panel 1 is connected to the driving IC. In addition, a controller 78 for adjusting light emission timings of the light emitting diodes 53a to 53c of the light source 53 and the light emitting diodes 73a to 73c of the light source 73 is connected to the control circuit 77 and the sources of light 53 and 73. Operation of the control circuit 77 and the controller 78, lighting of the light sources 53 and 73, and field sequential display by display of the liquid crystal display panel 1 will be described later.

When the liquid crystal display panel 1 including the frontlight 2 and the backlight 3 as constructed above is used in bright outdoors or in a bright room having an illuminating system, it is used as a reflective liquid crystal display panel with the frontlight 2 lightened and without the backlight 3 lightened. In this case, light from the frontlight 2 and light from the outside is incident on the liquid crystal display panel 1, passes through the layers on the substrate 5 and the liquid crystal layer L, is reflected by the plurality of optical diffuse reflective pixel electrodes 11, and again passes through the liquid crystal layer L and the layers on the substrate 5 to arrive at an viewer. In the meantime, current flows from the thin film transistor in the pixel electrode 11 for each pixel region to thereby control alignment of liquid crystal molecules over the pixel electrode 11, thus controlling display state for each pixel region to display images.

In addition, for use of the liquid crystal display panel 1 in the form of transmission display in a dark place, the light source 53 of the backlight 3 is lightened and light guided from the light source 53 into the optical waveguide 52 is emitted from the emission surface 52b to the liquid crystal display panel 1. In this case, the light emitted from the backlight 3 to the transparent substrate 6 of the liquid crystal display panel 1 penetrates the concave portion 22 (transmission region 30), penetrates the hole 22a provided corresponding to the concave portion 22, and penetrates the layers on the substrate 5 through the liquid crystal layer L to arrive the viewer. Accordingly, a transmission display state can be obtained. Of course, since the liquid crystal display can also be used in the form of reflection display in the dark place, the above-described reflective display may be employed.

Next, a display switching by the liquid crystal display panel 1 and field sequential display for performing color image display using the light from the light source 53 of the backlight 3 and the light from the light source 73 of the frontlight 2 will be described.

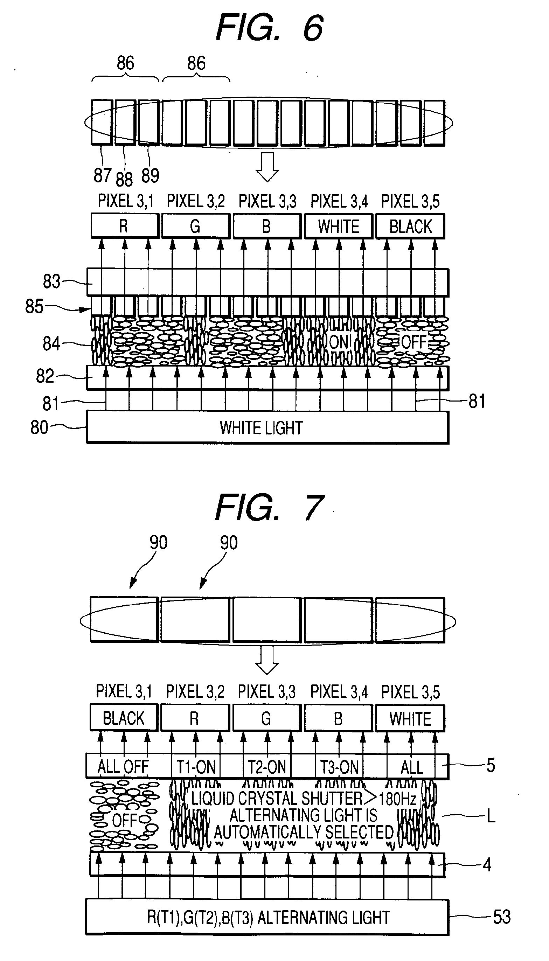

In a type of color display using a typical color filter, as shown in Fig. 6, white light 81 emitted from a backlight 80 passes through a liquid crystal layer between substrates 82 and 83 to control a transmission state for each pixel and then passes through a color filter layer 85 to perform a coloring operation for color display. In this case, one pixel 86 is divided into sub pixels 87, 88 and 89 of three color filters, a color is determined depending on which of sub pixels the light passes through. In addition, white and black colors are distinctly displayed when the white light 81 passes through the liquid crystal layer 84, and then passes through all or none of the three sub pixels.

For the field sequential display employed in the device of the embodiment as described hereinbefore, as shown in Fig. 7, one sub pixel is arranged for one pixel 90. Then, in the case of the backlight 3, the light emitting diodes 53a, 53b and 53c are sequentially lightened, and accordingly, light is alternately emitted with a lighting timing of more than 180 Hz (less than 5.6 msec). In the case of the frontlight 2, the light emitting diodes 73a, 73b and 73c are sequentially lightened, and accordingly, likewise, light is alternately emitted with a lighting timing of more than 180 Hz (less than 5.6 msec).

Then, when the light emitted from the red light emitting diode 53a of the backlight 3 penetrates the liquid crystal layer L for each pixel, a red color is displayed for each pixel, when the light emitted from the green light emitting diode 53b of the backlight 3 penetrates the liquid crystal layer L for each pixel, a green color is displayed for each pixel, and, when the light emitted from the blue light emitting diode 53c of the backlight 3 penetrates the liquid crystal layer L for each pixel, a blue color is displayed for each pixel. In addition, when the light emitted from the light emitting diodes 53a to 53c penetrate the liquid crystal layer L for each pixel, a white color is displayed for each pixel, and, when the light emitted from the light emitting diodes 53a to 53c do not penetrate the liquid crystal layer L for each pixel, a black color is displayed for each pixel. In addition, in the case of the frontlight 2, likewise, the color display can be performed by switching a transmission state in the liquid crystal layer L for each pixel depending on a color of light from the light emitting diodes 73a, 73b and 73c.

As can be clearly seen from a comparison between Figs. 6 and 7, in the case of the field sequential display method, since one pixel can be indicated by one sub pixel, liquid crystal of one pixel can be driven by arranging one pixel electrode for driving the liquid crystal in a region corresponding to one pixel. However, in the case of the color filter method, since three pixel electrodes are required for one pixel in order to perform the color display, the pixel electrodes, transistors'and wiring lines are required three times as many as those required for the field sequential display method. In addition, the field sequential display method does not require the color filter. As can be seen from the above comparison, since the field sequential display method does not require the color filter, display with higher brightness can be performed even if a backlight or frontlight with the same brightness as in the color filter method is used. Moreover, the field sequential display method requires the fewer number of transistors for driving the liquid crystal with the same number of pixels as in the color filter method, and accordingly, the number of wiring lines can be reduced. Further, the use of the fewer number of transistors may result in the fewer number of driving ICs for driving the transistors.

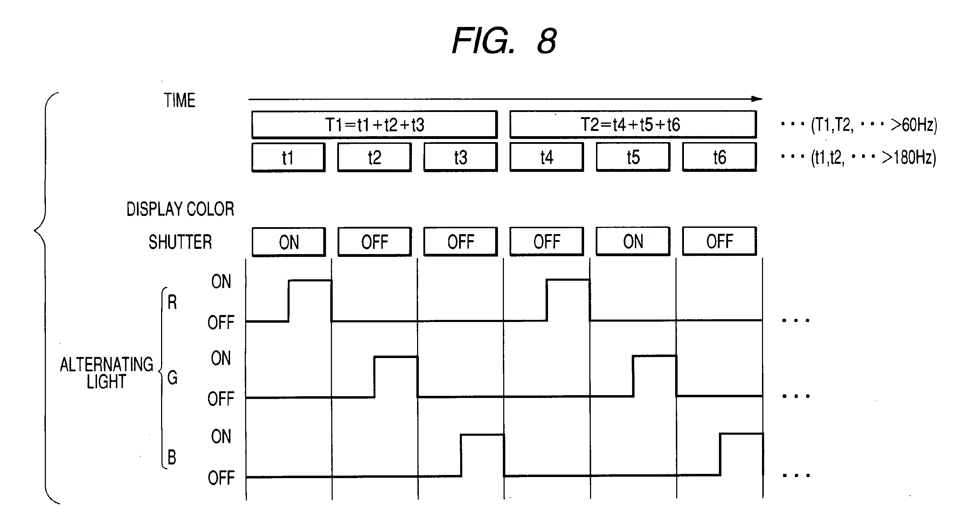

For the purpose of facilitating an understanding of a method of representing a display color of one sub pixel in the field sequential display described above with reference to Fig. 7, an example of a driving timing chart is shown in Fig. 8. In Fig. 8, the reason why the total of time during which alternating light of the three primary colors is emitted is taken as a value exceeding 60 Hz is that flickers may be perceived by a person's naked eyes if a selection operation is not performed within a value (short in time) exceeding 60 Hz. Accordingly, lighting time of each of three primary color light emitting diodes has a value exceeding 180 Hz. In Fig. 8, assuming the lighting time of the three primary color light emitting diodes is t1, t2 and t3, respectively, the total time T, i.e., t1 + t2 + t3, is time required to display one pixel. Accordingly, a timing at which the three primary color light emitting diodes are turned on or off to emit the alternating light is as shown in Fig. 8.

In the above-described field sequential method, for example, in order to prevent the flickers (glimmering of eyes) due to color switching, it is preferable to switch between the red, green and blue colors in a short time of less than about 1/60s, which is one frame time (screen display time of a set of three colors), i.e., more than about 1/180s per one color, i.e., less than about 5.6 ms. In addition, for example, in switching of a picture corresponding to the three primary colors, i.e., electrical write of the screen and response of liquid crystal, if 1/2 of the short time is assigned for the electrical write and remaining 1/2 of the short time is assigned as time for lighting of the backlight, each assigned time is preferably about 2.8 ms. Alternatively, if 1/4 of the short time is assigned for the electrical write and remaining 3/4 of the short time is assigned as time for lighting of the backlight, it is preferable that the former is about 1.4 ms and the latter is 4.2 ms.

Accordingly, in the case of the transmission display state, the controller 78 described hereinbefore controls the sources of lights 53a, 53b and 53c of the backlight 3 to emit the alternating light with the timing as shown in the timing chart of Fig. 8, while the control circuit 77 drives the transparent electrode 19 of a pixel at a desired position on the liquid crystal display panel 1 to thereby drive the liquid crystal of the transmission region 30 of a desired pixel. Accordingly, the color display of the pixel at the desired position for display in the transmission display state can be performed. Next, in the case of the reflection display state, the controller 78 described hereinbefore controls the sources of lights 73a, 73b and 73c of the frontlight 2 to emit the alternating light with the timing as shown in the timing chart of Fig. 8, while the control circuit 77 drives the pixel electrode 11 of a pixel at a desired position on the liquid crystal display panel 1 to thereby drive the liquid crystal of the reflection region 35 of a desired pixel. Accordingly, the color display of the pixel at the desired position for display in the reflection display state can be performed.

In addition, when the liquid crystal display panel 1 as constructed above is used in the reflection display state, the external light incident on the liquid crystal display panel and then reflected in the liquid crystal display panel, or the illuminated light incident on the liquid crystal display panel 1 from the frontlight 2 and then reflected from the alignment film of the liquid crystal display panel 1 passes through the liquid crystal layer L twice. In this case, if a value of Δn d (retardation) in a region in which the pixel electrode 11 is formed is set within a range of 300 to 500 nm, it is a desirable range for the reflection display state. In addition, in the case of the transmission display state, the transmission light incident on the liquid crystal display panel 1 from the backlight 3 and then arriving at the viewer passes through the liquid crystal layer L once. In this case, if a value of Δn d (retardation) in a region in which the concave portion 22 is formed on the insulating layer 20 is set within a range of 700 to 1100 nm, display of the transmission state can also be excellent by setting of the optical conditions common to the reflection region.

Accordingly, by employing the structure of this embodiment, the color sense or tone in the transmission display mode does not become different from that in the reflection display mode. Moreover, within the same pixel region, voltage dependency of the liquid crystal layer on the transmission region 30 in applying a driving voltage (optical threshold value, saturation voltage, steepness and the like) becomes approximately equal to voltage dependency of the liquid crystal layer on the reflection region 35 in applying the driving voltage. Accordingly, a difference in display visibility between the transmission display mode and the reflection display mode can be alleviated.

Structure of Driving Circuit of Liquid Crystal Display Panel

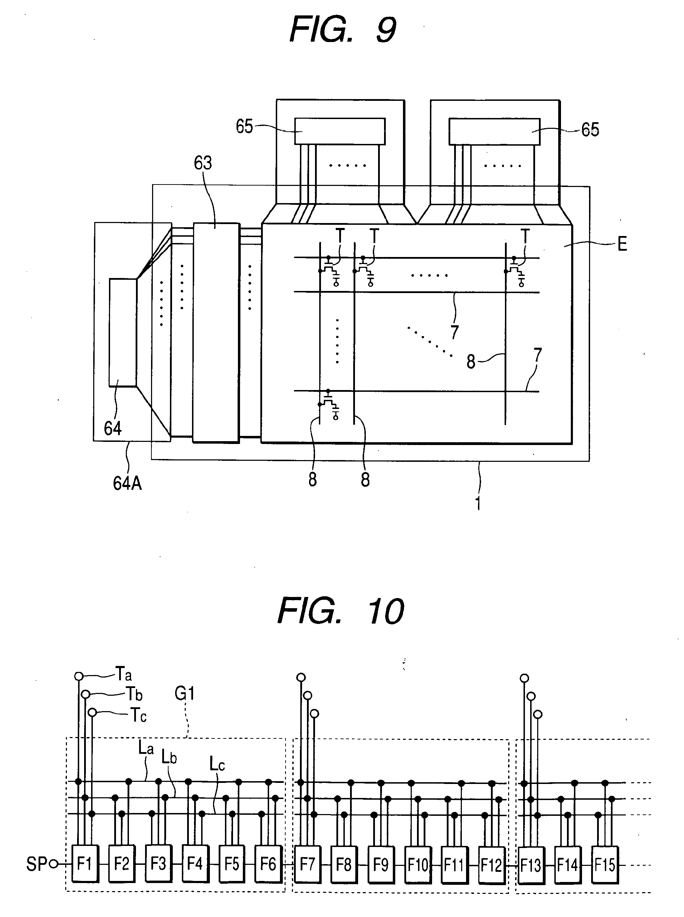

Figs. 9 to 12 are diagrams used to explain the gate wire line 7 and the source wire line 8 of the liquid crystal display panel 1 as described above, and a circuit adapted to drive these lines. Hereinafter, a structure of a driving circuit of the liquid crystal display panel 1 will be described by way of an example, however, the structure is not limited to the example.

In the liquid crystal display panel 1 as described above, as shown in Fig. 9, a display area E corresponding to an aggregate of pixel regions is partitioned, a gate driver (shift register) 63 for driving the scanning line 7 within the display area E is formed at a lateral side of the display area E, a clock generating circuit 64 is connected to the gate driver 63 via a connecting member 64A such as TCP (tape carrier package) or the like, and the required number (two in Fig. 9) of source drivers 65 connected to the source wiring lines 8 is arranged on the display area E. In this case, for example, transistors and wiring lines in the display area E and the gate driver 65 may be formed on the transparent substrate body 6 at a TFT array side by the same process, or alternatively, a separate driver chip may be connected to wiring lines on the substrate.

In the structure in which the gate driver 63 is formed on the substrate body 6, which is a TFT array substrate on which the gate wiring lines 7 and the source wiring lines 8 are formed, in the liquid crystal display panel 1, as shown in Fig. 9, transistors formed at intersections of the scanning lines 7 and the signal lines in the display area E and transistors formed in the gate driver 63 are of the same type (for example, n-channel transistors). In this case, since the transistors are formed on the same glass substrate, they have the same material including amorphous silicon or ploysilicon.

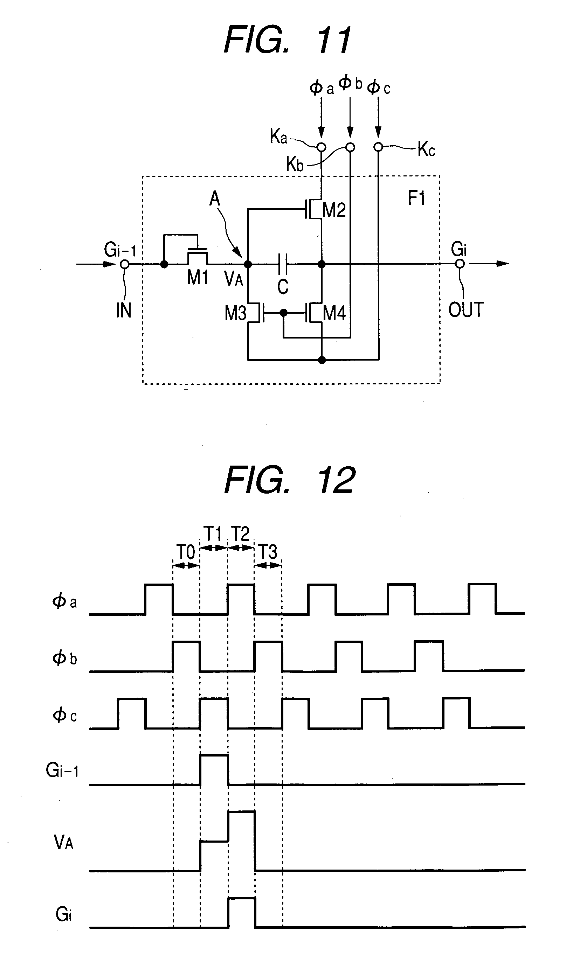

An example of an internal configuration of the gate driver 63 connected to the gate wiring lines 7 is shown in Fig. 10, an example of a configuration of a part of an internal circuit of the gate driver 63 is shown in Fig. 11, and an example of a driving timing chart for the internal circuit is shown in Fig. 12.

Fig. 11 is a diagram illustrating an internal circuit of a stage F1 constituting a shift register. Other stages F2 to Fn have the same structures as in the stage F1. The stage F1 has an input terminal IN for inputting a signal Gi-1 output from a previous stage, an output terminal OUT for outputting a signal Gi to be sent to the next stage, and three clock input terminals Ka, Kb and Kc for inputting three clock signals ϕa, ϕb, and ϕc having different phases.

The input terminal IN shown in Fig. 11 is connected to one end (point A) of a capacitor C acting as a memory element via a MIS transistor M1 acting as a diode. The other end of the capacitor C is connected to the output terminal OUT. The clock input terminal Ka is connected to a drain of a MIS transistor M2, The clock input terminal Kb is connected to gates of MIS transistors-M3 and M4, and the clock input terminal Kc is connected to sources of MIS transistors M3 and M4. The one end (point A) of the capacitor C is connected to a gate of the MIS transistor M2 and a drain of the MIS transistor M3. The other end of the capacitor C, that is, the output terminal OUT, is connected to a source of the MIS transistor M2 and a drain of the MIS transistor M4.

Fig. 12 is a timing chart used to explain operation of the stage F1. The stage F1 stores the signal Gi-1 input from the input terminal IN in the capacitor acting as the memory element and outputs the signal Gi from the output terminal OUT.

Since ϕb goes to H (high level) during a period T0 in the timing chart of Fig. 12, M3 and M4 are turned on. Then, both ends of the capacitor C are short-circuited, and accordingly, if charges have been already stored in the capacitor C, the charges are discharged. In addition, since ϕc goes to L (low level), M4 is turned on in the L state of ϕc, and accordingly, Gi goes to L. At this time, since M3 is turned on, a potential VA at the point A goes to L, and accordingly, M2 is turned off.

In the next period T1, since ϕb goes to L, M3 and M4 are turned off. At this time, although ϕc goes to H, since M3 and M4 are turned off, VA and Gi are not affected. In addition, in this state, since Gi-1 goes to H, VA also goes to H. When VA goes to H, M2 is turned on. At this time, since ϕa goes to L, Gi also goes to L. Then, since Gi goes to L and VA goes to H, the capacitor C provided between Gi and VA is charged. Then, VA is fixed to H. Accordingly, M2 is fixed to a turn-on state.

In the subsequent period T2, when ϕa goes to H, since M2 is turned on, Gi also goes to H. Then, VA increases to a potential, which is about twice H (i.e., is bootstrapped). Accordingly, a turn-on state of M2 is strengthened.

In the subsequent period T3, since ϕb goes to H, M3 and M4 are turned on. Then, since both ends of the capacitor C are short-circuited, the charges stored in the capacitor C are discharged. In addition, since ϕc goes to L, M4 is turned on in the L state of ϕc, and accordingly, Gi returns to L. At this time, since M3 is also turned on, VA also goes to L, and accordingly, M2 is turned off. In this way, even when a ground line, which is always held in L, is not connected to the stage F1, the signal Gi output from the output terminal OUT can return to L.

Fig. 10 is a diagram showing an entire configuration of the shift register in this embodiment. The shift register is composed of a plurality of stages F1, F2, F3, ... . Each of the stages F2, F3, ... has the same internal circuit as that of the stage F1 shown in Fig. 11. In addition, the stages F1, F2, F3, ... are cascaded. For example, the output terminal OUT of the stage F1 is connected to the input terminal IN of the next stage F2. The number of the stages F1, F2, F3, ... corresponds to the number of gate lines 7 of the liquid crystal display panel 1.

In this example, of the stages F1, F2, F3, ..., six consecutive stages forms one group. For example, the stages F1 to F6 form a group G1. The clock input terminals Ka, Kb and Kc that stages within one group have are connected among clock input terminals having the same phase and are connected to a set (three) of clock input terminals provided in one group.

For example, the clock input terminals Ka, Kb and Kc that stages within the group G1 have are connected to clock signal lines La, Lb and Lc, respectively, and the clock signal lines La, Lb and Lc are connected to a set of clock input terminals Ta, Tb and Tc provided in the group G1. The clock signal lines La, Lb and Lc are not connected to clock signal lines in other groups. Accordingly, clock signal lines in one group are not connected to the entire of shift register. Accordingly, arrangement of the wiring lines can be simplified.

Since clock signal lines in a group (for example, clock signal lines La, Lb and Lc in the group G1) are wiring lines formed on the TFT array substrate (transparent substrate 6), the wiring resistance thereof is large. On the contrary, wiring lines up to the clock input terminals (for example, the set of clock input terminals Ta, Tb and Tc provided in the group G1) may be made of a wiring material having low resistivity since they become wiring lines in the connecting member 64A such as TCP shown in Fig. 9. Accordingly, retardation of clock signals due to the wiring resistance can be reduced.

In the conventional general structure of the shift register, the clock signal ϕb having a high level potential or a ground potential is input to the gates of the MIS transistors M3 and M4, and the ground line which is always held in the ground potential is connected to the sources of the transistors M3 and M4. Accordingly, potentials of the gates of the MIS transistors M3 and M4 are always higher than those of the sources of the MIS transistors M3 and M4, and the voltage between the gates and the sources is always constant.

On the contrary, in the configuration of this embodiment shown in Figs. 9 to 12, the clock signal ϕb having the high level potential or the ground potential is input to the gates of the MIS transistors M3 and M4, while the clock signal ϕc having the high level potential or the ground potential is input to the sources of the MIS transistors M3 and M4. Also, since the clock signals ϕb and ϕc have different phases, the voltage between the gates and the sources varies in time, and thus it is not always fixed in the same direction. Accordingly, in this case, reliability of the MIS transistors can be enhanced.

The gate driver 63 is supplied with the clock signal ϕa, ϕb, and ϕc from the clock generating circuit 64 provided on the connecting member 64A such as TCP. In addition, the source drivers 65 drive the source wiring lines 8 in the display area E. In addition, the shift register of this embodiment may be used as a source driver of a display device.

In this case, if the display device is a 6-inch VGA panel (panel having 640 x 480 pixels), the number of stages of the gate drivers 63 for driving the gate wiring lines 7 is 480. In this embodiment, the stages in the shift register are divided in groups, each of which includes 6 stages. Therefore, 480 stages are divided into 80 groups G, ..., each of which includes 6 stages. Accordingly, the length of the clock signal lines in each group G is 1/80 of that of the clock signal lines without the grouping, and wiring capacitance and resistance of the clock signal lines in each group G are also 1/80 of those of the clock signal lines without the grouping. Also, the amount of retardation of the clock signals, which is determined by a simple calculation of wiring capacitance x wiring resistance, is 1/6400.

In this way, the number of wiring lines arranged in the gate driver 63 can be significantly reduced, thereby simplifying the arrangement of the wiring lines. In addition, in the liquid crystal display panel 1 as constructed above, since the field sequential driving does not require the color filter, one pixel electrode is satisfactory for driving one pixel without dividing one pixel into 3 dots. Accordingly, since the number of source wiring lines 8 may be 1/3 of that in the liquid crystal display device using the general color filter, the arrangement of wiring lines in the gate driver 63 for driving the gate wiring lines 7 can be simplified, and the number of circuits or wiring lines to be formed on a substrate to constitute the liquid crystal display panel 1 can be significantly reduced.

### Second Embodiment

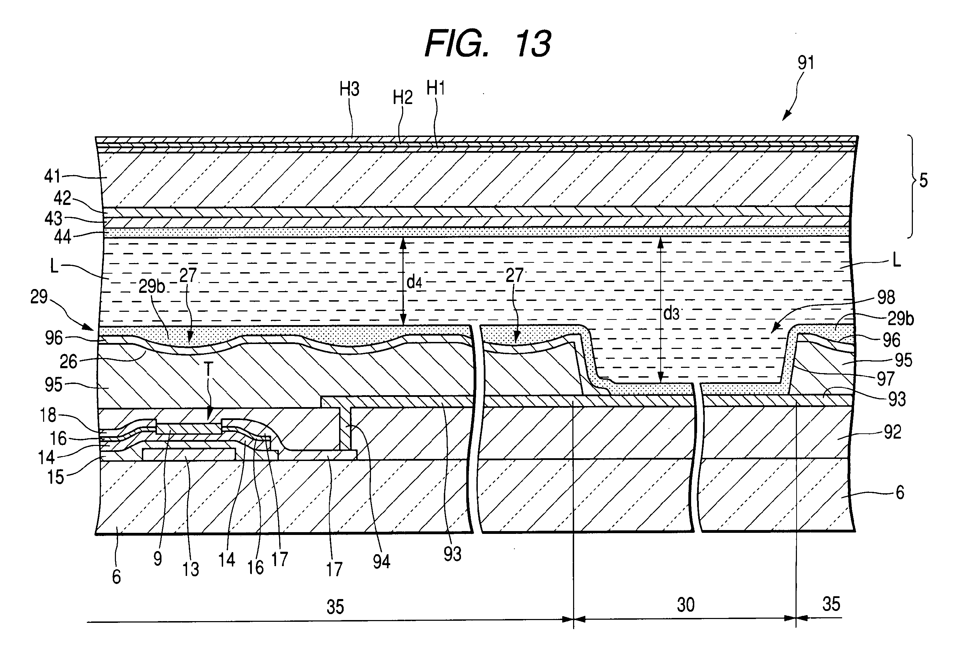

Fig. 13 is an exploded sectional view of a structure of a second embodiment of a liquid crystal display panel applied to the liquid crystal display device according to the invention.

A liquid crystal display panel 91 of the second embodiment is mostly similar to the liquid crystal display panel 1 described with reference to Fig. 3, except a structure of the pixel electrode. Therefore, the same elements as the liquid crystal display panel 1 described with reference to Fig. 3 are denoted by the same reference numerals, and explanation thereof will be omitted.

In the structure of the second embodiment, an interlayer insulating layer 92 is formed to cover a thin film transistor T and a surface of a substrate 6, and a transparent electrode 93 having a function corresponding to the transparent electrode 19 in the structure of the first embodiment is formed on the interlayer insulating layer 92. The transparent electrode 93 is connected to a source electrode 17 of the thin film transistor T via a connecting electrode 94 formed to fill a contact hole formed in the interlayer insulating layer 92 on the source electrode 17 of the thin film transistor T, and has the same function as the transparent electrode 19 in the structure of the first embodiment. That is, the transparent electrode 93 controls alignment of liquid crystal by applying an electric field to liquid crystal molecules existing in the transmission display region 30 and controls a liquid crystal function as a shutter for shielding illumination light, which intends to penetrate the transmission display region 30, emitted from the backlight.

Next, on the interlayer insulating layer 92 is formed an insulating layer 95 equivalent to the insulating layer 20 made of an organic material used in the structure of the first embodiment. In addition, on the insulating layer 95 is formed an optical diffuse reflective pixel electrode (optically reflective pixel electrode) 96 having the same unevenness shape as in the first embodiment and made of a metal material having high reflectivity, such as Al, Ag, or the like. This pixel electrode 96 has the same function as the pixel electrode 11 of the first embodiment, except for a connection structure with respect to the thin film transistor 7.

A concave portion 97 positioned on the transparent electrode 93 is formed to arrive at the transparent electrode 93, in a portion corresponding to the transmission region 30 in the insulating layer 95, a plane-shaped hole 98 fitting a plane shape of the concave portion 97 is formed in the pixel electrode 96 of a portion corresponding to a position of the concave portion 97, and a portion of the pixel electrode 96 projects in an edge of the concave portion 97 along an incline plane of the concave portion 97 and is electrically connected to the transparent electrode 93 positioned at the bottom of the concave portion 97. This electrical connection allows the transparent electrode 93 and the pixel electrode 96 to be simultaneously driven according to switching of the thin film transistor T.

The liquid crystal display panel 91 having the transparent electrodes 93 and the pixel electrodes 96 as described above is used as the liquid crystal display device including the frontlight 2 and the backlight 3, like the liquid crystal display panel 1 as described earlier, and the same operation and effect as in the liquid crystal display device A as described earlier can be achieved.

According to the above-mentioned invention, the alternating light can be emitted from both of the front and back sides of the transflective liquid crystal display panel by using the frontlight provided at the front side and the backlight provided at the back side via the controller. In addition, display switching can be performed in synchronization with the alternating light in the liquid crystal display panel. Thereby, without requiring the color filters, a reflection color display mode can be achieved using the frontlight and a transmission color display mode can be achieved using the backlight. Accordingly, the reflection color display mode and the transmission color display mode can be selectively used as occasion demands.

Of course, one or both of the reflection color display mode and the transmission color display mode can be selectively used. Also, the liquid crystal display device itself is not limited to the transflective liquid crystal display device.

Further, with the above configuration, since the signal of the initial state level for initializing the state of each of the stages of the shift register is input from one of the clock input terminals, a separate wiring line for supplying the signal alone of the initial state level is not necessary. Accordingly, the number of wiring lines to be connected to the shift register decreases, and hence, an area required for the wiring lines can be reduced.

Furthermore, since the light of the three primary colors emitted from at least one of the frontlight and the backlight is incident on the liquid crystal display panel for monochrome display in the time-division manner and the three primary colors are mixed based on the time-division manner, the transmissive or reflective color liquid crystal display can be achieved without the color filters.

In addition, since the light emitter of the light source of at least one of the frontlight and the backlight is constituted by LEDs, the color reflection display mode and the color reflection display mode can be used with a low power. In addition, even in the case of the color reflection display mode, by mixing the colors from the frontlight in the time-division manner, the color display mode with excellent color reproductivity can be achieved.

Moreover, since the optical waveguide and the optical guiding means are provided in at least one of the frontlight and the backlight and the LEDs are used for the light emitter, the device can be made thin. Accordingly, in addition of an advantage of omission of the color filters, the color liquid crystal display device is adaptable to be employed for small and lightweight apparatuses inexpensively.

In the above configuration, when the clock input terminals included in the stages of each group are integrated into one system, each group has a set of clock input terminals. Accordingly, clock signal wiring lines in the shift register do not lead to the entire range of the shift register. Accordingly, the clock signal wiring lines in the shift register become shorter, which can reduce retardation of the clock signals due to the wiring capacitance or resistance.

Further, with the above configuration, since one of the two states (high level and low level in embodiments of the invention) memorized by the memory means (capacitor in embodiments of the invention) is initialized, by the initializing means (transistors in embodiment of the invention), to the initial state level (ground potential in embodiment of the invention) of the signal input from one of the clock input terminals, the state of each of the stages of the shift register can be initialized without a separate wiring line for supplying only the signal of the initial state level (for example, the ground line).

Furthermore, in the above configuration, when all MIS transistors are of the same type, the manufacturing process can be simplified. In addition, a structure in which only the same-type MIS transistors simplifying the manufacturing process are used can be realized by using polyphase clocks.

## Claims

1. A color liquid crystal display device comprising:
a transflective liquid crystal display panel;
a frontlight arranged on a surface of the liquid crystal display panel to emit light from the surface of the liquid crystal display panel, the frontlight including a front-side light source for emitting light having three primary colors;
a backlight arranged on a back side of the liquid crystal display panel to emit light from the back side of the liquid crystal display panel, the backlight including a back-side light source for emitting light having three primary colors;
a controller for controlling the front-side light source and the back-side light source such that light emitted from the front-side light source and the back-side light source is irradiated onto the liquid crystal display panel as alternating light; and
a control circuit for controlling display of the liquid crystal display panel in synchronization with the alternating light.

2. The color liquid crystal display device according to claim 1,
wherein a plurality of pixel electrodes is provided on the liquid crystal display panel, and the plurality of pixel electrodes is controlled by a plurality of switching elements driven by a plurality of gate lines and a plurality of source lines, and
wherein the plurality of gate lines is connected to a gate driver, the gate driver is provided with a shift register having multiple-stage output terminals, the shift register having m stages (m is an integer of one or more) each of which memorizes one of two states and includes clock input terminals for inputting clock signals having n (n is an integer of two or more) different phases, input terminals for inputting signals sent from an input terminal of the shift register or an output terminal of a previous stage, and output terminals for outputting signals to be sent to an input terminal of the next stage or an output terminal of the shift register, and a signal of an initial state level for initializing a state of each of the stages is input from one of the clock input terminals to each of the stages.

3. The color liquid crystal display device according to claim 1 or 2,
wherein either reflective liquid crystal display mode or transmissive liquid crystal display mode is selectable, the reflective liquid crystal display mode being performed by the alternating light emitted from the front-side light source and the display control of the liquid crystal display panel and the transmissive liquid crystal display mode being performed by the alternating light emitted from the back-side light source and the display control of the liquid crystal display panel.

4. The color liquid crystal display device according to any of claims 1 to 3,
wherein at least one of the frontlight and the backlight includes a light emitter composed of red, green and blue of three primary color light emitting diodes, an optical waveguide which is arranged along the liquid crystal display panel and on which light emitted from the light emitter is incident, and an optical guiding means provided in the optical waveguide to guide the light emitted from the light emitter to the liquid crystal display panel.

5. The color liquid crystal display device according to any of claims 1 to 4,
wherein the liquid crystal display panel is of a monochrome display type with no color filter, and the monochrome display type liquid crystal display panel has a function of selectively transmitting three primary transmission light emitted from the backlight in a time-division manner to perform transmission color display and a function of selectively reflecting the three primary transmission light emitted from the frontlight in the time-division manner to perform reflection color display.

6. The color liquid crystal display device according to any of claims 1 to 5,
wherein each pixel of the transflective liquid crystal display panel is divided into a transmission region for transmitting the light emitted from the backlight and a reflection region for reflecting the light emitted from the frontlight.

7. The color liquid crystal display device according to any of claims 2 to 6,
wherein stages of the shift register are divided into a plurality of groups, and the clock input terminals provided in stages of each group are connected among clock input terminals having the same phase.

8. The color liquid crystal display device according to any of claims 2 to 7,
wherein each of the stages includes a memory means for memorizing one of the two states and an initializing means for initializing a state memorized by the memory means to an initial state level of a signal input from one of the clock input terminals.

9. The color liquid crystal display device according to claim 8,
wherein the initializing means is constituted by MIS transistors, and MIS transistors, including the MIS transistors constituting the initializing means, included in each of the stages are of the same type.
